# EUROPÄISCHE PATENTSCHRIFT

(11) **EP 2 646 212 B1**
(45) Veröffentlichungstag und Bekanntmachung des Hinweises auf die Patenterteilung: **21.12.2016**
(21) Anmeldenummer: 11706583.9
(22) Anmeldetag: 03.03.2011
(51) Int. Cl.: B29B 9/08, B29B 9/14, B01J 2/10, B29C 47/00, B29C 47/36, B29C 47/60, B29C 47/38, B29C 47/40

(54) **VERFAHREN ZUR HERSTELLUNG VON POLYMERAGGLOMERATEN**
METHOD FOR PRODUCING POLYMER AGGLOMERATES
PROCÉDÉ DE FABRICATION D'AGGLOMÉRATS DE POLYMÈRE

(30) Priorität: 30.11.2010 DE 102010060911
(43) Veröffentlichungstag der Anmeldung: 09.10.2013
(73) Patentinhaber: Zeppelin Reimelt GmbH, 63322 Rödermark (DE)
(72) Erfinder: SCHWARZ, Raimund, 38644 Goslar (DE); POLLER, Stephan, 44787 Bochum (DE); BRUNKAU, Markus, 34266 Niestetal (DE); SCHILL, Thomas, 37297 Berkatal (DE); VAN DIJK, Dick, Benenden Kent TN17 4EU (GB)
(74) Vertreter: Kleine, Hubertus
(86) Internationale Anmeldenummer: PCT/EP2011/053166
(87) Internationale Veröffentlichungsnummer: WO 2012/072275

(56) Entgegenhaltungen:
- EP-A1- 0 735 078
- EP-A2- 1 829 660
- WO-A1-2009/054262
- CH-A5- 632 939
- DE-A1-102007 029 008
- US-A- 5 938 994

## Beschreibung

Die vorliegende Erfindung betrifft ein Verfahren zur Herstellung von Polymeragglomeraten.

Zur Herstellung von Compounds bzw. Polymeragglomeraten ist es aus dem Stand der Technik bekannt, als Compounder bezeichnete Mischvorrichtungen einzusetzen, die mit einem als Granulat oder auch als Pulver gelieferten Polymer befüllt werden, das durch diesen gefördert wird, wobei das Polymer beim Durchgang durch den Compounder aufgeschmolzen und mit Zusatzstoffen in Form von die Materialeigenschaften des Polymers beeinflussenden Additiven durchmischt wird. Das so entstandene Mischgut verlässt den Compounder durch einen Auslass als pastöse Masse, wird dann gekühlt, beispielsweise mit Wasser oder Luft und zu Agglomeraten vorbestimmter Korngröße geschnitten.

Es ist außerdem aus dem Stand der Technik bekannt, Faserwerkstoffe wie beispielsweise Holzfasern in ein Polymer einzuarbeiten. So beschreibt die DE 198 60 836 C1 ein Verfahren und eine Vorrichtung zum Herstellen eines Formkörpers, welcher zu einem überwiegenden Teil aus einem Pflanzenmaterial besteht und ein thermoplastisches Material aufweist. Bei diesem Verfahren werden zunächst die Holzpartikel auf maximal 250° C erhitzt und anschließend entgast. Dabei sollen durch Temperatur und die Entfeuchtung des Holzes über verschiedene Entgasungsabfolgen sowie durch die Eliminierung von Lufteinschlüssen eine optimale Benetzung der zerklüfteten Holzoberfläche erreicht werden. Zur Durchmischung des Holzes und des Kunststoffs wird hier ein gegenläufiger Doppelschneckenextruder verwendet. Dieser besitzt allerdings den Nachteil, dass die Entgasungseffektivität gering ist und der Extruder damit sehr groß bemessen sein muss, um eine gewünschte Restfeuchtigkeit des Holzes zu erreichen. Solche gegenläufigen Doppelschneckenextruder, wie sie beispielsweise aus einer in der CH 632 939 beschriebenen Vorrichtung bekannt sind, werden beispielsweise beim Verfestigen von Schmelzen oder Pasten eingesetzt, eignen sich aber nicht für den Einsatz von mit Faserwerkstoffen versetzten Pasten. Ein Zerschneiden oder Deagglomerieren der Faserwerkstoffe ist mit einer in der CH 632 939 beschriebenen Vorrichtung nicht möglich. Gleichläufige Doppelschneckenextruder eignen sich dagegen sehr gut für die Entgasung/Entfeuchtung von Holzpartikeln. Ein solcher wird beispielsweise bei dem in der US 5,938,994 beschriebenen Verfahren zur Herstellung von Plastik-Holzfaser-Pellets eingesetzt, wobei das Mischgut unter Druck in dem Doppelschneckenextruder mit Schneckenelementen mit hohen Scherraten zu einer pastösen Masse vermischt, anschließend unter hohem Druck durch eine Lochplatte aus dem Extruder herausgepresst und danach mit einem rotierenden Messer zerschnitten wird. Der Nachteil eines solchen gleichläufigen Doppelschneckenextruders liegt darin, dass dieser üblicherweise mit sehr viel höheren Scherraten arbeitet als ein gegenläufiger Doppelschneckenextruder und somit mit einem solchen gleichläufigen Doppelschneckenextruder die im Extruder mit dem Kunststoff vermischten Holzfasern verkürzt werden. Mit der Verkürzung der Holzfasern geht allerdings auch eine Verschlechterung der Festigkeit im hergestellten Formkörper einher.

Um die Faserlängen der Holzfasern nicht zu verkürzen, wird in der DE 1262293 A1 vorgeschlagen, das Polymer separat aufzuschmelzen und die Fasern in einem späteren Schritt im Anschluss in den Aufschmelzextruder zu geben. Damit wird eine bestmögliche Erhaltung der Eingangsfaserlängen gewährleistet.

Die Verarbeitung von Gemischen aus Polymer- und Naturlangfasern geschieht zur Erhaltung der Faserlängen beispielsweise unter Verwendung sogenannter Rovings. Es existieren Untersuchungen, nach welchen verschiedene Naturfaser-Rovings direkt im Extrusionsprozess zugegeben werden (Kristiina Oksman Niska and Aji P. Matew, 10th International Conference on Wood and Biofibre Plastic composites, 11-13 May 2009, Madison USA). Im Rahmen der Untersuchungen wird in einem Doppelschneckenextruder zuerst der Kunststoff aufgeschmolzen und anschließend die Naturfaser-Rovings zugeführt. Dabei verkürzen sich beispielsweise Sisal-Rovings auf Längen zwischen 3 und 5,5 mm. Andere Naturfasern zeigen eine noch stärkere Verkürzung.

Aufgabe der vorliegenden Erfindung ist es, ein Verfahren zur Herstellung von Polymeragglomeraten bereitzustellen, mit dem die Polymeragglomerate in einem einfach handzuhabenden und materialschonenden Prozess herstellbar sind und mit der insbesondere beim Zusatz von Faserwerkstoffen die Ausgangsfaserlängen weitgehend beibehalten werden.

Diese Aufgabe wird durch eine ein Verfahren zur Herstellung von Polymeragglomeraten mit den Merkmalen des Anspruchs 1 gelöst.

Das erfindungsgemäße Verfahren weist die folgenden Verfahrensschritte auf: Zunächst wird der Compounder mit dem Polymer und den Zuschlagstoffen beaufschlagt, das Mischgut wird sodann temperiert, gemischt und entgast. In einem anschließenden Verfahrensschritt wird das aus Polymer und Zuschlagstoffen bestehende Mischgut kontinuierlich und drucklos in Form einer pastösen Masse aus dem Compounder ausgetragen. Anschließend wird das Mischgut über einen Verbindungskanal in einen Agglomerierbehälter weitergeleitet. In dem Agglomerierbehälter fällt die pastöse Masse zunächst auf ein Agglomerierwerkzeug, mit dem ein kontinuierliches Agglomerieren des Mischgutes in ein Agglomerat vorbestimmter Korngröße stattfindet. Schließlich wird das so gebildete Agglomerat abgekühlt und als fertiges Agglomerat aus dem Agglomerierbehälter ausgetragen.

Sämtliche dieser Verfahrensschritte ermöglichen eine schonende und kontinuierliche Agglomeratherstellung, im Compounder durch die Verwendung einer gleichläufigen Doppelschnecke, im Agglomerierbehälter durch den Einsatz eines nicht schneidenden Agglomerierwerkzeugs. In dem Compounder muss zum Austragen des Mischgutes aus dem Compounder kein zusätzlicher Druck beaufschlagt werden. Da das Agglomerierwerkzeug keine Schneidwerkzeuge einsetzt, kann ein Nachschleifen solcher Schneidwerkzeuge unterbleiben. Vorteilhafte Ausführungsvarianten der Erfindung sind Gegenstand der Unteransprüche.

Gemäß einer vorteilhaften Ausführungsvariante des erfindungsgemäßen Verfahrens wird das Mischgut vor dem Austragen aus dem Compounder auf eine für die anschließende Agglomerierung mit dem Agglomerierwerkzeug geeignete Temperatur erwärmt. Die Temperatur ist insbesondere zur Erhaltung der Faserlängen des Faserwerkstoffes des Faserwerkstoff-/Polymerschmelzgemenges von besonderer Wichtigkeit. Zu hohe Temperaturen führen dabei zu Verklebungen auf dem Agglomerierwerkzeug. Im Extremfall führt die zu hohe Temperatur zum Verkohlen bzw. Verbrennen des Faserstoffes, z.B. wenn dieser aus Naturfasern wie Flachs, Sisal, Holzfasern etc. besteht. Zu tiefe Temperaturen hingegen führen zu einer Verkürzung der Faserlängen durch Zerbrechen des Mischgutes im Agglomerierwerkzeug.

Nachfolgend werden Ausführungsbeispiele der Erfindung anhand der beiliegenden Zeichnungen näher erläutert. Es zeigen:
Fig. 1 eine Seitenschnittansicht einer Ausführungsvariante einer Vorrichtung zur Druchführung der Herstellung von Polymeragglomeraten,

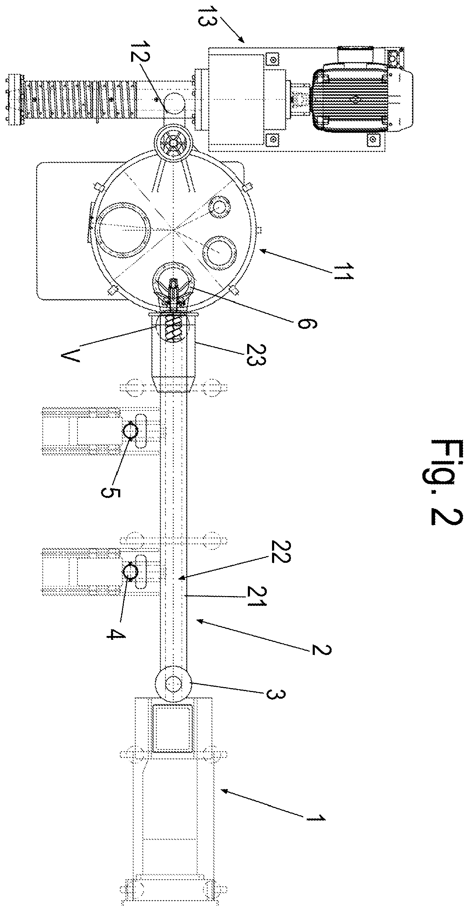

Fig. 2 eine Ansicht von oben auf die Vorrichtung aus Fig. 1,
Fig. 3 eine vergrößerte Detailansicht des in Fig. 1 mit III bezeichneten Ausschnitts der Vorrichtung,
Fig. 4 eine Schnittansicht durch das vergrößerte Detail der Fig. 3 entlang der Linie A - A und
Fig. 5 eine vergrößerte Detailansicht des in Fig. 2 mit V bezeichneten Ausschnitts der Vorrichtung.

In der nachfolgenden Figurenbeschreibung beziehen sich Begriffe oben, unten, links, rechts, vorne, hinten usw. ausschließlich auf die in den jeweiligen Figuren gewählte beispielhafte Darstellung und Position des Compounders, der Doppelschnecke und weiterer Teile. Diese Begriffe sind nicht einschränkend zu verstehen, d.h. durch verschiedene Arbeitsstellungen oder dergleichen können sich diese Bezüge verändern.

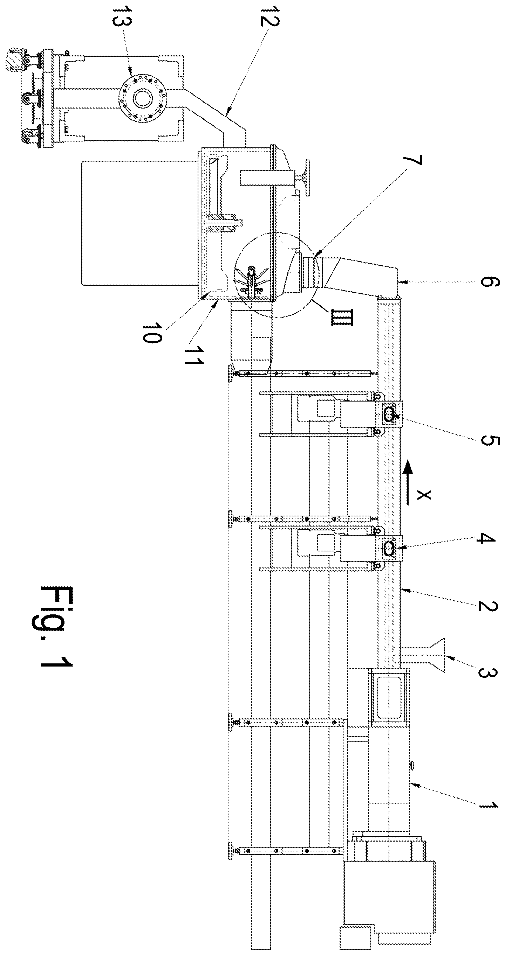

In der Figur 1 ist mit dem Bezugszeichen 2 insgesamt ein Compounder bezeichnet. Der Compounder 2 weist im Wesentlichen ein Gehäuse 21 mit einer darin angeordneten gleichläufigen Doppelschnecke 22 auf, die von einem Antrieb 1, bestehend aus Motor, Getriebe und Kupplungseinheit, angetrieben wird und entspricht im Wesentlichen dem in der DE 10 2006 010 458 A1 beschriebenen Compounder. Der Antrieb ist dabei im Hinblick auf die Einstellung der Drehzahl, des Drehmoments und des Achsabstandes auf die durch Mischung von Polymeren mit Zuschlagstoffen, insbesondere mit Faserwerkstoffen, zugeschnitten.

Des weiteren verfügt der Compounder 2 über mehrere Materialeinlässe 3, 4, wobei in den dem Antrieb 1 nahen Materialeinlass 3 das Polymer, vorzugsweise Polypropylen, zugeführt wird und über dem einziehenden Schneckenelement der Doppelschnecke 22 in den Innenraum innerhalb des Gehäuses 21 eingezogen wird. Unmittelbar hinter dem Materialeinlass 3 ist eine erste Temperiereinheit zur Aufheizung des Polymers vorgesehen.

Weiter in Förderrichtung ist mindestens ein weiterer vorzugsweise als Seitenfütterung ausgebildeter Materialeinlass 4 vorgesehen, über den der Compounder mit Zuschlagstoffen beaufschlagt wird. Als Zuschlagstoffe kommen hier zum einen Additive zum Einsatz, die insbesondere die Eigenschaften des Polymers beeinflussen.

Des weiteren wird über den Materialeinlass 4 auch für die Herstellung von Faserwerkstoffen enthaltenen Polymeragglomeraten der Faserwerkstoff in den Compounder 2 eingebracht. Unter Faserwerkstoffen sind hier insbesondere Naturfasern, Glasfasern, Kohlenstofffasern, Keramikfasern, Metallfasern, organische oder anorganische Fasern zu verstehen. Besonders bevorzugt werden Naturfasern wie Holz-, Flachs-, Hanf- oder Sisalfasern eingesetzt. Eine Befütterung des Compounders mit dem Faserwerkstoff erfolgt bevorzugt auch durch den Materialeinlass 3 zusammen mit dem Polymer, wobei die einzelnen Stoffe jeweils über eine eigene Dosiereinheit zugeführt werden. Der Anteil der Faserwerkstoffe im Agglomerat beträgt dabei zwischen 10 und 90 Gewichts-%, bevorzugt zwischen 40 und 80 Gewichts-%, insbesondere zwischen 50 und 75 Gewichts-%,.

Die anfängliche Temperierung des Polymer/Faserwerkstoffgemisches erfolgt zunächst derart, dass die Polymertemperatur unterhalb der Schmelztemperatur des Polymers gehalten wird, aber dennoch so hoch ist, um insbesondere beim Einsatz von Holzfasern die Holztrocknung optimal zu gestalten.

Die Schneckenelemente der gleichläufigen Doppelschnecke sind als niedrigscherende Elemente ausgeführt, wie sie in der oben erwähnten, den Compounder im Detail beschreibenden DE 10 2006 010 458 A1 beschrieben sind. Um den Restfeuchtigkeitsgehalt des Polymer/Faserwerkstoff-Gemisches zu reduzieren, ist an den Compounder 2 mindestens eine Entgasungseinheit 5 angeordnet. Je nach Art des Faserwerkstoffes, insbesondere beim Einsatz von Holzfasern, erfolgt die Trocknung in mehreren Schritten mit hintereinander angeordneten Entgasungseinheiten 5.

Das fertig gemischte und entgaste Mischgut wird anschließend drucklos über einen Auslass 23 des Compounders 2 in einen Verbindungskanal 6 gefördert, der das Mischgut kontinuierlich vom Compounder 2 weiter zu einem Agglomerierbehälter 11 befördert.

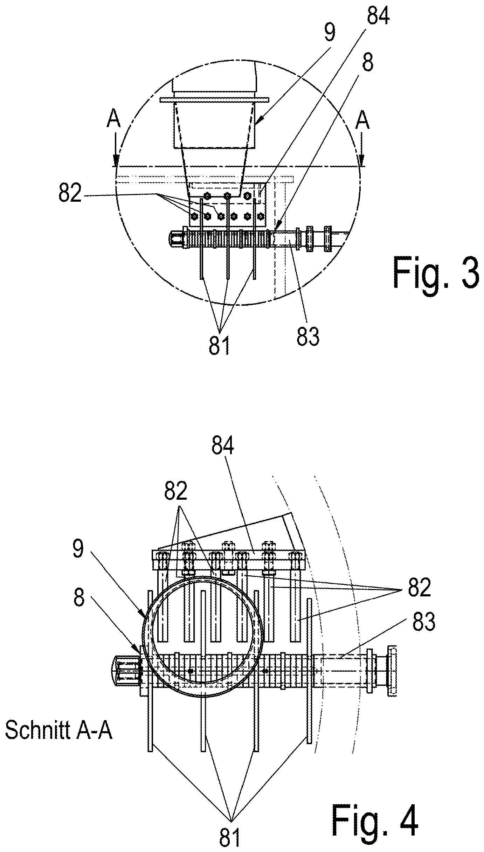

Der Agglomerierbehälter 11 besteht im Wesentlichen aus einem zylinderförmigen Behälter, in dem unmittelbar unter dem Auslass des Verbindungskanals 6 ein Agglomerierwerkzeug 8 vorgesehen ist, wobei der Übergang zwischen Verbindungskanal 6 zum Agglomerierbehälter 11 und das Agglomerierwerkzeug 8 im Detail anhand der Figuren 3 und 4 noch näher beschrieben wird.

Auf dem Boden des Agglomerierbehälters 11 ist ein Kühlwerkzeug 10 in Form eines zentral im Behälter gelagerten hohlen Rotors gelagert, der von innen von einem Kühlmittel, beispielsweise Kühlwasser, durchflossen wird. Der Rotor ist dabei mit einer Leitschaufel im radial äußeren Bereich des Rotors ausgebildet, mit Hilfe dessen das fertige Agglomerat über einen seitlichen Auslass am Agglomerierbehälter kontinuierlich ausgetragen wird.

Der vorzugsweise als Austragsdüse ausgeführte Auslass 12 führt die Agglomerate dann beispielsweise über eine Fördereinrichtung zu einer Bevorratung in Silobehältern. Diesen Behältern können die Agglomerate dosiert entnommen und der Weiterverarbeitung zugeführt werden. So kann beispielsweise die Weiterverarbeitung über einen gegenläufigen Doppelschneckenextruder 13 geschehen, welcher Spritzgussmaschinen zur Herstellung von Formteilen beschickt.

Wie in den in den Figuren 3 und 4 gezeigten Detaildarstellungen des Agglomerierwerkzeugs bzw. des Übergangs zwischen Verbindungskanal 6 und Agglomerierwerkzeug 8 zu erkennen ist, ist das Agglomerierwerkzeug 8 des Agglomerierbehälters 11 in Fallrichtung des Mischgutes unterhalb des Verbindungskanals 6 angeordnet und weist ineinander greifende Rotoren 81 und Statoren 82 zur Erzeugung von Agglomeraten vorbestimmter Korngröße auf. Die Statoren 82 sind dabei, wie in Figur 3 zu erkennen ist, an einem Gehäuseteil des Agglomerierbehälters 11 befestigt, beispielsweise durch lösbare Schraubverbindungen. So können die Abstände zwischen einzelnen Rotoren 81 und Statoren 82 durch Weglassen einzelner Statoren 82 verändert werden.

Die Rotoren 81 sind auf einer senkrecht zu den Statoren 82 und zur Behälterwand des Agglomerierbehälters 11 in den Agglomerierbehälter 11 hineinragenden Achse 83 angeordnet, wobei die Position der einzelnen Rotoren 81 in Längsrichtung der Achse 83 verstellbar ist. Der Antrieb der Achse 83 des Agglomerierwerkzeugs 8 erfolgt dabei über einen außerhalb dieses Agglomerierbehälters 11 angeordneten Motor, wobei die Umfangsgeschwindigkeit der auf der Achse angeordneten Rotoren 81 beispielsweise bei etwa 40 m/s liegt und über einen Frequenzumrichter in der Antriebseinheit des Agglomerierwerkzeugs 8 veränderbar ist.

Wie in Figur 3 zu erkennen, ist an dem dem Agglomerierbehälter 11 zugewandten Ende des Verbindungskanals 6 eine exzentrisch verstellbare Zuführdüse 7 angeordnet, mit der die Auftreffposition des Mischgutes auf das Agglomerierwerkzeug 8 einstellbar ist.

Wie in Figur 4 gut zu erkennen ist, kann durch die Positionierung der Zuführdüse 7 bzw. durch eine an der Zuführdüse 7 befestigte Exzenterscheibe 9 das Mischgut auf bestimmte Positionen des Agglomerierwerkzeugs 8 eingestellt werden und so das Mischgut zu Agglomeraten in unterschiedlichen Korngrößen zerteilt werden. Wichtig ist hier, dass die Rotoren 81 und Statoren 82 des Agglomerierwerkzeugs 8 so beschaffen sind, dass die Fasern des beigemischten Faserwerkstoffes nicht zerschnitten werden, sondern an den Grenzflächen sanft aus ihrer Polymerumgebung gezogen werden.

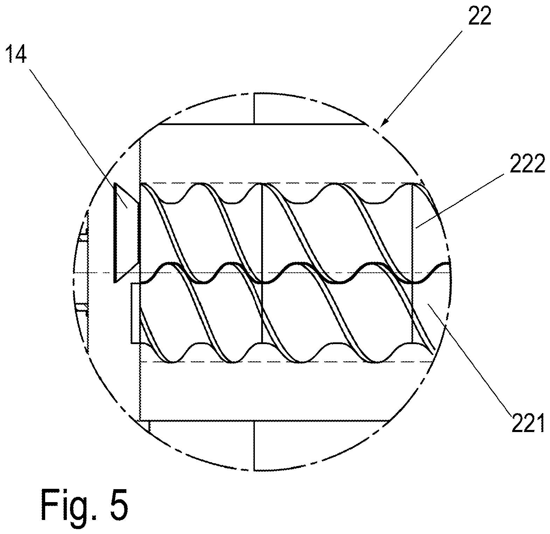

Wie in Figur 5 zu erkennen ist, ist gemäß einer bevorzugten Ausführungsvariante an der dem Verbindungskanal 6 nahen Spitze einer der Schnecken 221, 222 der Doppelschnecke 22 eine Stauscheibe 14 angeordnet bzw. aufgesetzt. Die Stauscheibe 14 wird dabei besonders bevorzugt auf der austragsabgewandten Schnecke 222 des Schneckenpaares 22 aufgesetzt. Durch die Anordnung der Stauscheibe 14 an der Spitze der Schnecke 222 wird eine Erhöhung des Schüttgewichtes, insbesondere bei Zugabe von Zuschlagstoffen mit sehr niedrigem Schüttgewicht erreicht. Über die Erhöhung des Schüttgewichts über die Verblendung einer der beiden Schneckenspitzen ist eine deutliche Anhebung des Maschinendurchsatzes möglich. Die Scherung wird bei dieser Ausführungsvariante nicht merklich erhöht, was an der Erhaltung der produzierten Faserlängen erkennbar ist.

### Bezugszeichenliste

- 1: Antrieb
- 2: Compounder
- 3: Materialeinlass
- 4: Materialeinlass
- 5: Entgasungseinheit
- 6: Verbindungskanal
- 7: Zuführdüse
- 8: Agglomerierwerkzeug
- 9: Exenterscheibe
- 10: Kühlwerkzeug
- 11: Agglomerierbehälter
- 12: Auslass
- 13: Extruder
- 14: Stauscheibe
- 21: Gehäuse
- 22: Doppelschnecke
- 23: Auslass
- 81: Rotoren
- 82: Statoren
- 83: Achse
- 221: Schnecke
- 222: Schnecke

## Patentansprüche

1. Verfahren zur Herstellung von Polymeragglomeraten mit einer Vorrichtung, die einen Compounder (2) mit einem Gehäuse (21) und eine darin angeordnete gleichläufige Doppelschnecke (22), mehreren Materialeinlässen (3, 4) zur Beaufschlagung mit einem Polymer und Zuschlagstoffen, Temperiereinheiten zur Aufheizung des aus Polymer und Zuschlagstoffen bestehenden Mischgutes, mindestens eine Entgasungseinheit (5) und einen Auslass sowie einen Agglomerierbehälter (11) mit einem Agglomerierwerkzeug (8) und einem Kühlwerkzeug (10),aufweist, wobei der Agglomerierbehälter (11) über einen Verbindungskanal (6) mit dem Auslass (23) des Compounders (2) verbunden ist und das Agglomerierwerkzeug (8) des Agglomerierbehälters (11) in Fallrichtung des Mischgutes unterhalb des Verbindungskanals (6) angeordnet ist und ineinander greifende Rotoren (81) und Statoren (82) zur Erzeugung von Agglomeraten vorbestimmter Korngröße aufweist, aufweisend die Verfahrensschritte:
- Zuführen des Polymers und von Zuschlagstoffen in einen Compounder (2),
- Temperieren, Mischen und Entgasen des Polymers und der Zuschlagstoffe im Compounder (2),
- Kontinuierliches druckloses Austragen des aus Polymer und Zuschlagstoffen bestehenden Mischgutes in Form einer pastösen Masse aus dem Compounder (2),
- Weiterleiten des Mischgutes über einen Verbindungskanal (6) in einen Agglomerierbehälter (11),
- Kontinuierliches Agglomerieren des Mischgutes in ein Agglomerat vorbestimmter Korngröße,
- Kontinuierliches Abkühlen des Agglomerats und Austragen des fertigen Agglomerats aus dem Agglomerierbehälter (11).

2. Verfahren nach Anspruch 1, **dadurch gekennzeichnet, dass** die Zuschlagstoffe aus Additiven und Faserwerkstoffen bestehen.

3. Verfahren nach Anspruch 2, **dadurch gekennzeichnet, dass** als Faserwerkstoffe Naturfasern, insbesondere Holz-, Flachs-, Hanf- oder Sisalfaser eingesetzt werden.

4. Verfahren nach Anspruch 2 oder 3, **dadurch gekennzeichnet, dass** der Anteil der Faserwerkstoffe im Agglomerat zwischen 10 und 90 Gew.-% beträgt.

5. Verfahren nach Anspruch 4, **dadurch gekennzeichnet, dass** der Anteil der Faserwerkstoffe im Agglomerat zwischen 40 und 80 Gew.-% beträgt.

6. Verfahren nach einem der Ansprüche 1 bis 5, **dadurch gekennzeichnet, dass** der Compounder (2) gleichzeitig mit dem Polymer und den Faserwerkstoffen beaufschlagt wird.

7. Verfahren nach einem der Ansprüche 1 bis 6, **dadurch gekennzeichnet, dass** die Beaufschlagung des Compounders (2) mit den Zuschlagstoffen in mehreren Schritten erfolgt.

8. Verfahren nach einem der Ansprüche 1 bis 7, **dadurch gekennzeichnet, dass** das Mischgut vor dem Austragen aus dem Compounder (2) auf eine für die anschließende Agglomerierung mit dem Agglomerierwerkzeug (8) geeignete Temperatur temperiert wird.

9. Verfahren nach einem der Ansprüche 1 bis 8, **dadurch gekennzeichnet, dass** vor dem Austragen des Mischgutes aus dem Compounder (2) die Abstände zwischen den Rotoren (81) und Statoren (82) des Agglomerierwerkzeugs (8) auf ein für das Mischgut geeignetes Maß eingestellt werden.

10. Verfahren nach einem der Ansprüche 1 bis 9, **dadurch gekennzeichnet, dass** vor dem Austragen des Mischgutes aus dem Compounder (2) die exzentrisch verstellbare Zuführdüse (7) so positioniert wird, dass das Mischgut auf eine vorbestimmte Auftreffposition des Agglomerierwerkzeugs (8) auftrifft.

## Claims

1. A method for producing polymer agglomerates with a device, comprising a compounder (2) with a housing (21) and a co-rotating twin screw (22) arranged therein, a plurality of material inlets (3, 4) for the admission of a polymer and additives, tempering units for heating the mixing material consisting of the polymer and the additives, at least one degassing unit (5) and an outlet, as well as an agglomerating vessel (11) with an agglomerating tool (8) and a cooling tool (10), wherein the agglomerating vessel (11) is connected via a connection channel (6) to the outlet (23) of the compounder (2), and the agglomerating tool (8) of the agglomerating vessel (11) is arranged in the fall direction of the mixing material below the connection channel (6), and comprises mutually engaging rotors (81) and stators (82) for producing agglomerates of a defined grain size, comprising the following method steps:
- feeding the polymer and additives into a compounder (2),
- tempering, mixing and degassing the polymer and the additives in the compounder (2),
- continuous unpressurised discharging of the mixing material consisting of the polymer and the additives in the form of a pasty composition out of the compounder (2),
- conveying the mixing material via a connection channel (6) into an agglomerating vessel (11),
- continuously agglomerating the mixing material to form an agglomerate of a predefined grain size,
- continuously cooling the agglomerate and discharging the finished agglomerate from the agglomerating vessel (11).

2. A method according to claim 1, **characterized in that** the additives consist of additives and fibre materials.

3. A method according to claim 2, **characterized in that** natural fibres, particularly wood, flax, hemp or sisal fibres, are used as fibre materials.

4. A method according to claim 2 or 3, **characterized in that** the proportion of the fibre materials in the agglomerate is between 10 and 90% by weight.

5. A method according to claim 4, **characterized in that** the proportion of the fibre materials in the agglomerate is between 40 and 80% by weight.

6. A method according to one of the claims 1 to 5, **characterized in that** the compounder (2) is supplied simultaneously with the polymer and the fibre materials.

7. A method according to one of the claims 1 to 6, **characterized in that** supplying the compounder (2) with the additives occurs in several steps.

8. A method according to one of the claims 1 to 7, **characterized in that** the mixing material, prior to the discharge from the compounder (2), is tempered to an appropriate temperature for the subsequent agglomerating with the agglomerating tool (8).

9. A method according to one of the claims 1 to 8, **characterized in that** prior to the discharge of the mixing material from the compounder (2), the distances between the rotors (81) and the stators (82) of the agglomerating tool (8) are set to an amount which is suitable for the mixing material.

10. A method according to one of the claims 1 to 9, **characterized in that** prior to the discharge of the mixing material from the compounder (2), the eccentrically adjustable supply nozzle (7) is positioned in such a way that the mixing material impacts a predetermined impact position of the agglomerating tool (8).

## Revendications

1. Procédé pour fabriquer des agglomérés de polymères avec un dispositif qui comprend un formulateur (2) avec un corps (21) et une double vis sans fin (22) tournant dans le même sens disposée à l'intérieur, plusieurs entrées de matériau (3, 4) pour le chargement avec un polymère et des charges, des unités de mise à température pour le chauffage du mélange composé du polymère et des charges, au moins une unité de dégazage (5) et une sortie ainsi qu'une cuve d'agglomération (11) avec un outil d'agglomération (8) et un outil de refroidissement (10), la cuve d'agglomération (11) communiquant par un canal de communication (6) avec la sortie (23) du formulateur (2) et l'outil d'agglomération (8) de la cuve d'agglomération (11) étant disposé en dessous du canal de communication (6) dans le sens de chute du mélange et comprenant des rotors (81) et des stators (82) qui se mettent en prise les uns dans les autres pour produire des agglomérats ayant une grosseur de grains déterminée, comprenant les étapes de procédé suivantes :
- acheminement du polymère et des charges dans un formulateur (2),
- mise à température, mélange et dégazage du polymère et des charges dans le formulateur (2),
- extraction en continu sans pression du mélange composé du polymère et des charges hors du formulateur (2) sous forme d'une masse pâteuse,
- acheminement du mélange dans une cuve d'agglomération (11) par un canal de communication (6),
- agglomération en continu du mélange pour obtenir un agglomérat ayant une grosseur de grains déterminée,
- refroidissement en continu de l'agglomérat et extraction de l'agglomérat fini de la cuve d'agglomération (11).

2. Procédé selon la revendication 1, **caractérisé en ce que** les charges se composent d'additifs et de matériaux fibreux.

3. Procédé selon la revendication 2, **caractérisé en ce que** les matériaux fibreux utilisés sont des fibres naturelles, en particulier des fibres de bois, de lin, de chanvre ou de sisal.

4. Procédé selon la revendication 2 ou 3, **caractérisé en ce que** la proportion des matériaux fibreux dans l'agglomérat est comprise entre 10 % et 90 % du poids.

5. Procédé selon la revendication 4, **caractérisé en ce que** la proportion des matériaux fibreux dans l'agglomérat est comprise entre 40 % et 80 % du poids.

6. Procédé selon l'une des revendications 1 à 5, **caractérisé en ce que** le formulateur (2) est chargé simultanément avec le polymère et les matériaux fibreux.

7. Procédé selon l'une des revendications 1 à 6, **caractérisé en ce que** le chargement du formulateur (2) avec les charges s'effectue en plusieurs étapes.

8. Procédé selon l'une des revendications 1 à 7, **caractérisé en ce qu'**avant d'être extrait du formulateur (2), le mélange est amené à une température convenant pour son agglomération subséquente avec l'outil d'agglomération (8).

9. Procédé selon l'une des revendications 1 à 8, **caractérisé en ce qu'**avant l'extraction du mélange hors du formulateur (2), les distances entre les rotors (81) et les stators (82) de l'outil d'agglomération (8) sont réglées à une dimension convenant pour le mélange.

10. Procédé selon l'une des revendications 1 à 9, **caractérisé en ce qu'**avant l'extraction du mélange hors du formulateur (2), la buse d'arrivée (7) déplaçable de façon excentrique est positionnée de telle façon que le mélange parvienne sur une position de contact prédéterminée de l'outil d'agglomération (8).
